# EUROPEAN PATENT APPLICATION

(11) **EP 4 738 799 A1**
(43) Date of publication of application: **06.05.2026**
(21) Application number: 24829882.0
(22) Date of filing: 27.02.2024
(51) Int. Cl.: H04L 69/16

(54) **SIGNAL TRANSMISSION METHOD, AND DEVICE AND STORAGE MEDIUM**

(30) Priority: 30.06.2023 CN 202310795253
(71) Applicant: ZTE Corporation, Shenzhen, Guangdong 518057 (CN)
(72) Inventor: YUAN, Liquan, Shenzhen, Guangdong 518057 (CN)
(74) Representative: Savi, Massimiliano
(86) International application number: PCT/CN2024/078804
(87) International publication number: WO 2025/001225

(57) **Abstract**

The present application is applied to the technical field of communications. Disclosed are a signal transmission method, and a device and a storage medium. The signal transmission method is applied to a first terminal device, and comprises: receiving a beacon request message sent by a first network device, wherein the beacon request message carries identification information, and the identification information is used for indicating that the first terminal device supports a random MAC address function and for identifying the first terminal device; and adding the identification information into a probe request message, and sending the probe request message to a second network device.

## Description

### CROSS-REFERENCE TO RELATED APPLICATION

This application is filed on the basis of the Chinese patent application No. 2023107952531 filed June 30, 2023, and claims priority of the Chinese patent application, the entire contents of which are incorporated herein by reference.

### TECHNICAL FIELD

The present disclosure relates to the field of communication, and in particular to a method for signal transmission, an electronic apparatus, and a storage medium.

### BACKGROUND

During the signal transmission, the terminal device typically employs a unique and fixed MAC address to establish a connection with a network device. The identification and authentication technologies based on device-fixed MAC addresses have been widely utilized in the field of wireless transmission. However, the utilization of fixed MAC addresses may allow a third-party device to employ MAC address sniffing technology to track and locate the connection between a terminal device and a network device, and thus the security is relatively low.

### SUMMARY

Provided are a method for signal transmission, an electronic apparatus, and a storage medium in some embodiments of the present disclosure. Thereby, the security of signals during transmission can be enhanced.

According to an embodiment of the present disclosure, a signal for signal transmission is provided. The method is applied to a first terminal device, and includes, receiving a beacon request message sent by a first network device; where the beacon request message carries identification information, and the identification information is indicative of support of random Media Access Control (MAC) address function by the first terminal device and is configured to identify the first terminal device; and appending the identification information to a probe request message, and sending the probe request message to a second network device.

According to another embodiment of the present disclosure, a method for signal transmission is provided. The method is applied to a first network device, and includes, sending a beacon request message to a first terminal device; wherein the beacon request message carries identification information, and the identification information is indicative of a support of random MAC address function by the first terminal device and identifies the first terminal device.

According to yet another embodiment of the present disclosure, a method for signal transmission is provided. The method is applied to a second network device, and includes, receiving a probe request message sent by a first terminal device; wherein the probe request message carries identification information configured for indicating that the first terminal device supports a random MAC address function and identifying the first terminal device; recognizing the first terminal device according to the identification information, and acquiring signal parameter information corresponding to the first terminal device; and sending the signal parameter information corresponding to the first terminal device to a first network device.

According to yet another embodiment of the present disclosure, an electronic apparatus is provided. The electronic apparatus includes, at least one processor; and a memory storing at least one program thereon, which when executed by the processor, causes the processor to carry out any one of the methods as described above.

According to yet another embodiment of the present disclosure, a computer-readable medium is provided. The computer-readable medium stores a computer program thereon, which when executed by a processor, causes the processor to carry out any one of the methods as described above.

According to an embodiment of the present disclosure, the first terminal device receives a beacon request message sent by the first network device. The beacon request message carries identification information. The identification information is indicative that the first terminal device supports the random MAC address function and to identify the first terminal device. After that, the first terminal device appends the identification information to a probe request message and sends the probe request information to the second network device. In an embodiment, the beacon request message carries the identification information that is appended to the probe request message to be sent to the second network device. In addition, the identification information corresponds to the beacon request message, so different probe request messages carry different identification information. Therefore, during the transmission of the probe request message, it is difficult for a third-party device to sniff and track the connection between the first terminal device and the network device. Thereby, the security of the signal during transmission is significantly enhanced.

Additional aspects and advantages of the present disclosure will be set forth in part in the description which follows, and in part will be apparent from the description which follows, or may be learned by practice of the present disclosure.

### BRIEF DESCRIPTION OF DRAWINGS

In order to illustrate the technical scheme in the embodiments of the present disclosure, the drawings related to the description of the embodiments or related technologies will be briefly introduced below. It is apparent that, the drawings described below are only some embodiments of the present disclosure. Those having ordinary skills in the art can derive other drawings according to these drawings without devoting creative effort.
FIG. 1 depicts a schematic diagram showing an architecture of a system in which a method for signal transmission according to an embodiment of the present disclosure may be carried out;
FIG. 2 depicts a schematic diagram showing another architecture of a system in which a method for signal transmission according to an embodiment of the present disclosure may be carried out;
FIG. 3 depicts a flowchart showing a method for signal transmission according to an embodiment of the present disclosure, at a first terminal device;
FIG. 4 depicts another flowchart showing a method for signal transmission according to an embodiment of the present disclosure, at a first terminal device;
FIG. 5 depicts a schematic diagram showing a beacon message request of a method for signal transmission according to an embodiment of the present disclosure;
FIG. 6 depicts a schematic diagram showing a probe message request of a method for signal transmission according to an embodiment of the present disclosure;
FIG. 7 depicts a schematic diagram showing the identification information of a method for signal transmission according to an embodiment of the present disclosure;
FIG. 8 depicts a flowchart showing a method for signal transmission according to an embodiment of the present disclosure, at a first network device;
FIG. 9 depicts a flowchart showing a process of collecting a terminal signal parameter at a first user in a method for signal transmission according to an embodiment of the present disclosure;
FIG. 10 is a flowchart showing a process of receiving a terminal signal parameter report at a first user equipment in a method for signal transmission according to an embodiment of the present disclosure;
FIG. 11 depicts a flowchart showing a refusal indication at a first user equipment in a method for signal transmission according to an embodiment of the present disclosure;
FIG. 12 depicts a flowchart showing a method for signal transmission according to an embodiment of the present disclosure, at a second network device;
FIG. 13 depicts another flowchart showing a method for signal transmission according to an embodiment of the present disclosure, at a second user equipment;
FIG. 14 depicts a flowchart showing the cancellation of acquisition of a terminal signal parameter at a second user equipment, in a method for signal transmission according to an embodiment of the present disclosure;
FIG. 15 depicts a schematic diagram showing a method for signal transmission according to an embodiment of the present disclosure;
FIG. 16 depicts another schematic diagram showing a method for signal transmission according to an embodiment of the present disclosure;
FIG. 17 depicts another schematic diagram showing a method for signal transmission according to an embodiment of the present disclosure;
FIG. 18 depicts a schematic diagram showing the configuration of identification information according to an embodiment of the present disclosure;
FIG. 19 depicts another schematic diagram showing the configuration of identification information according to an embodiment of the present disclosure;
FIG. 20 depicts another schematic diagram showing the configuration of identification information according to an embodiment of the present disclosure; and
FIG. 21 depicts a schematic diagram showing an electronic apparatus to which a method for signal transmission is applied according to an embodiment of the present disclosure.

### DETAILED DESCRIPTION

The objectives, technical scheme, and advantages of the present disclosure will become apparent through the following description for various embodiments in conjunction with the drawings. It should be understood that the embodiments described here are intended for illustration but are not limitation to the present disclosure.

It shall be noted that, in some cases, the operations shown or described may be performed in a different order than the logical order shown in the flowcharts. It should be noted that the terms "first" and "second", if used in the description and the drawings are intended to distinguish similar objects, and do not necessarily imply any specific order or sequence.

It should also be understood that references to "one embodiment" or "some embodiments" etc. described in the description of some embodiments of the present disclosure mean that specific features, structures, or characteristics described in conjunction with this embodiment are included in one or more embodiments of the present disclosure. Thus, the phrases "in one embodiment", "in some embodiments", "in other embodiments" and "in further embodiments" appearing in different places in this description do not necessarily all refer to the same embodiment, but mean "one or more but not all embodiments" unless otherwise emphasized. The terms "include", "contain", "having" and their variations all mean "including but not limited to" unless otherwise specifically emphasized.

In the description of embodiments of the present disclosure, the terms "greater than", "less than", "more than", etc. shall be understood to exclude the number being referred to; and the terms "above", "below", "within", etc. shall be understood to include the number being referred to. Term "first" and "second" if described, are intended for distinguishing technical features, which shall not be understood as indicating or implying relative importance or implicitly indicating the number of the indicated technical features or the order of the indicated technical features. It should be understood that the description with respect to the orientations, such as the terms "up", "down", "front", "rear", "left", and "right", indicate the orientation or position relationship based on the orientation or position relationship shown in the drawings, and are only for the convenience of describing the present invention and simplifying the description, rather than indicating or implying that the device or component referred to must have a specific orientation, be constructed and operated in a specific orientation. And thus, those terms shall not be understood as a limitation to the present disclosure.

In the description of various embodiments of the present disclosure, terms such as provide, mount, or connect should be broadly understood, unless otherwise specified, and those having ordinary skills in the art can reasonably determine the specific meanings of the above terms in various embodiments of the present disclosure in conjunction with the specific contents of the technical scheme.

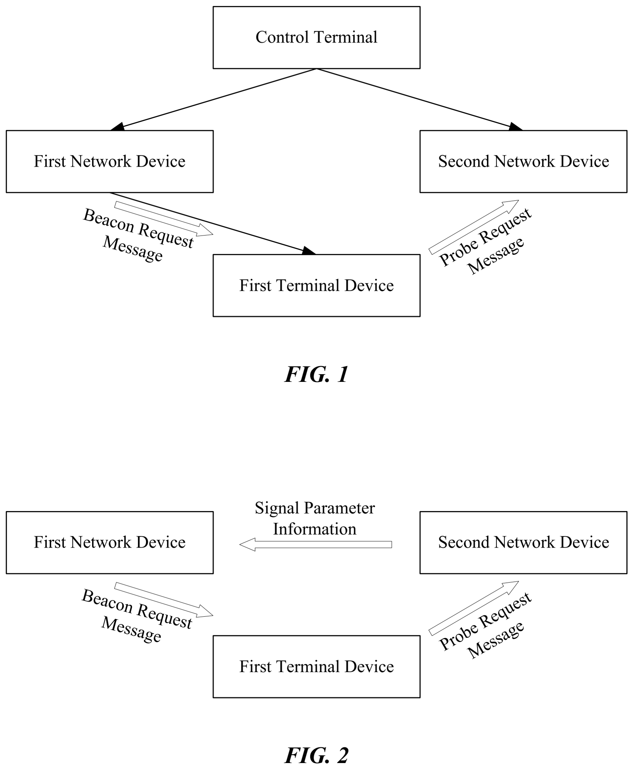

FIG. 1 depicts a schematic diagram showing an architecture of a system in which a method for signal transmission according to an embodiment of the present disclosure may be carried out. In a non-limiting embodiment, the architecture is associated with an EasyMesh network, which includes a control terminal, a first network device, a second network device, and a first terminal device. The control terminal is connected with the first network device and the second network device through a wired or wireless backhaul network. A wireless network connection is established between the first network device and the first terminal device. The control terminal sends a beacon request message to the first terminal device through the first network device, so as to trigger the first terminal device to send a probe request message over the channel where the second network device operates. The second terminal device can collect the Receive Signal Strength Indicator (RSSI) and Channel State Information (CSI) according to the received probe request message, and feedback the RSSI and CSI to the control terminal through the merged network. The control terminal then determines whether to recommend a network device for the candidate connection to the first terminal device, such as the second network device, so as to realize the device connection control function of the first terminal device.

During the signal transmission, the terminal device typically employs a unique and fixed MAC address to establish a connection with a network device. The identification and authentication technologies based on device-fixed MAC addresses have been widely utilized in the field of wireless transmission. For example, Access Control based on device MAC address, Client Steering, and other related technologies have been written into the easy mesh standard of Wi-Fi Alliance (WFA) and the Wi-Fi Broadband Alliance (WBA) white paper. However, the utilization of fixed MAC addresses may allow a third-party device to employ MAC address sniffing technology to track and locate the connection between a terminal device and a network device, and thus the security is relatively low.

To this end, in the existing technology, a Random MAC address (RMA) is adopted before a terminal device accesses a network device. However, the existing terminal device can independently decide whether to utilize the Identifiable Random MAC address (IRM) in the probe request message. In order to facilitate the identification of the terminal device, the conditions for the terminal device to employ the identifiable random MAC address cannot be determined. For example, for the EasyMesh network shown in FIG. 1, in case the first network device sends a beacon request message to the first terminal device, but the first terminal device sends a probe request message by another means instead of through an identifiable random MAC address, the control terminal will not be able to recognize the probe request message. In such a case, failure occurs in the acquisition of the signal strength indicator and the channel status message. Further, the terminal device sends an identifiable random MAC address to the network device only during the connection. The identifiable random MAC address will not change after the terminal device is connected to the network device. However, for the network architecture shown in FIG. 1, the control terminal may periodically or aperiodically require the first terminal device to send probe request messages to collect signal strength indicators and channel status messages. If the first terminal device employs the same identifiable random MAC address in a plurality of probe request messages, sniffing and tracking by the third-party device may occur, and the security will be reduced.

In view of this, a method for signal transmission, an electronic apparatus, and a storage medium are provided in some embodiments of the present disclosure. According to the method, the beacon request message carries identification information. The identification information is appended to the probe request message to be sent to the second network device. In addition, the identification information corresponds to the beacon request message, so different probe request messages carry different identification information. Therefore, during the transmission of the probe request message, it is difficult for a third-party device to sniff and track the connection between the first terminal device and the network device. Thereby, the security of the signal during transmission is significantly enhanced.

Some embodiments of the present disclosure will be illustrated in conjunction with the drawings.

FIG. 2 depicts another schematic diagram showing an architecture of a system in which a method for signal transmission according to an embodiment of the present disclosure may be carried out. The architecture includes a first network device, a second network device, and a first terminal device.

The first network device is a device configured to send a beacon request message. The first network device is in wireless communication with the first terminal device for data exchange.

The first network device is a wireless network access device, also known as a wireless access point (AP), which is the core device of a wireless local area network. The first network device can convert a wired network into a wireless network, such that the first terminal device can be connected to the network wirelessly. In addition, the first network device can realize simultaneous connection of multiple terminal devices, providing high-speed and stable network services. The operating principle of a wireless network access device is to convert wired network signals into wireless signals, and transmit data through the wireless signals. In wireless networks, wireless network access devices act as a relay station, which receives data from wireless devices and then transmits the data to wired networks. At the same time, wireless network access devices can also receive data from wired networks, and then convert the data into wireless signals and transmit them to wireless devices.

The first terminal device may receive the beacon request message and append the identification information in the beacon request message to the probe request message. The first terminal device may be in wireless communication with the first network device, for data exchange, and may be further in communication with the second network device, and send a probe request message to the second network device over the operating channel of the second network device.

The first terminal device is a device that inputs programs and data to a computer or receives processing results output by the computer via communication facilities. The first terminal device is usually arranged in a convenient place where communication facilities can be utilized to operate with remote computers. The first terminal device includes a communication interface, control means, and dedicated or selected input and output means. The first terminal device may be a computer, a tablet, a mobile phone, or the like.

The second network device may receive the probe request message sent by the first terminal device, and recognize the first terminal device according to the identification information in the probe request message to obtain signal parameter information corresponding to the first terminal device, and send the signal parameter information corresponding to the first terminal device to the first network device. The second network device is connected with the first network device through a wired backhaul network or a wireless backhaul network and exchanges data. The second network device is also in communicative connection with the first terminal device.

It should be noted that a method for signal transmission according to an embodiment of the present disclosure may be carried out in both the network architectures shown in FIG. 1 and FIG. 2. In the network shown in FIG. 1, the controller determines whether to recommend a network device for candidate connection to the first terminal device according to the signal parameter information of the first terminal device. In contrast, in the network shown in FIG. 2, the first network device determines whether to recommend a network device for candidate connection to the first terminal device according to the signal parameter information of the first terminal device. Therefore, the architecture of the system in which a method for signal transmission may be carried out at least includes the first network device, the second network device, and the first terminal device.

It should be noted that the first network device and the second network device are just collective terms. The network architecture includes a plurality of first network devices and a plurality of second network devices.

The system architecture and application scenarios described in an embodiment of the present disclosure are intended for a better understanding of rather than limitations to the technical scheme of various embodiments of the present disclosure. It is known to those having ordinary skills in the art that, with the evolution of the system architecture and the emergence of new application scenarios, the technical scheme provided by the embodiments of the present disclosure is also applicable to similar technical problems.

It can be understood by those having ordinary skills in the art that the system architecture shown in FIG. 1 or 2 does not constitute a limitation to the embodiments of the present disclosure, and may include more or less components than those shown, or some components may be combined, or have different arrangements of components.

In the system architecture shown in FIG. 1 or FIG. 2, each unit can call its stored program for signal transmission to carry out the method for signal transmission.

Based on the structure of the above system architecture, some embodiments of a method for signal transmission of the present disclosure are proposed.

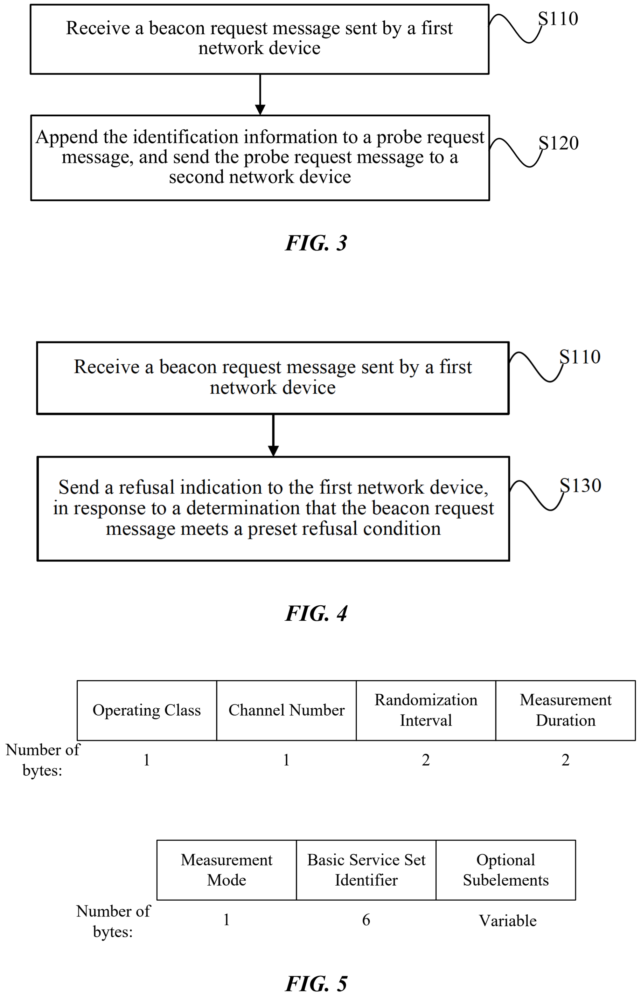

FIG. 3 depicts a flowchart showing a method for signal transmission according to an embodiment of the present disclosure, performed at a first terminal device. The method for signal transmission according to an embodiment of the present disclosure is applied to the first terminal device. The method includes but is not limited to the following operations.

At Operation S110, a beacon request message sent by a first network device is received. The beacon request message carries identification information that is indicative that the first terminal device support random MAC address function and to identify the first terminal device.

At Operation S120, the identification information is appended to a probe request message, and the probe request message is sent to a second network device.

It should be noted that in an embodiment, the beacon request message carries the identification information that is appended to the probe request message to be sent to the second network device. In addition, the identification information corresponds to the beacon request message, so different probe request messages carry different identification information. Therefore, during the transmission of the probe request message, it is difficult for a third-party device to sniff and track the connection between the first terminal device and the network device. Thereby, the security of the signal during transmission is significantly enhanced.

It should be noted that the identification information is indicative that the first terminal device supports random MAC address function and to identify the first terminal device. According to the identification information, the first terminal device can access the wireless network through the random MAC address, so as to connect with the first network device or the second network device. In addition, based on the identification information, the second network device can recognize the first terminal device according to the received probe request message, and obtain the signal parameter information corresponding to the first terminal device.

It should be noted that the identification information can be configured in the following ways. The first network device configures the identification information for the first terminal device, that is, the identification information is generated at the network side. The first terminal device configures the identification information for itself and informs the first network device, that is, the identification information is generated at the terminal device side. The first network device and the first terminal device respectively generate the identification information locally according to the same rule. After the configuration of the identification information is completed, the first network device can send a beacon request message carrying the identification information to the first terminal device. The first terminal device appends the identification information to the probe request message and sends the probe request message to the second network device.

It should be noted that both the beacon request message and the probe request message are encrypted during transmission. Thus, it is not possible for a third-party device to sniff and track the identification information carried in the beacon request message and the probe request message.

FIG. 4 depicts another flowchart showing a method for signal transmission according to an embodiment of the present disclosure, performed at a first terminal device. After operation S110, the method may include but is not limited to the following operations.

At Operation S130, a refusal indication signaling is sent to the first network device, in response to a determination that the beacon request message meets a preset refusal condition. The refusal indication signaling indicates that the first terminal device refuses to carry identification information in the probe request message.

The refusal condition includes at least one of, an information filling error of the beacon request message; a security risk present in the identification information carried in the beacon request message; or an occupation of the first terminal device by another service.

It should be noted that when it is determined that the beacon request message meets the preset refusal conditions, the first terminal device sends the refusal indication signaling to the first network device, thereby rejecting the beacon request message that may contain identification information. As such the error rate during the signal transmission can be reduced and the efficiency of signal transmission can be improved.

It should be noted that there are various situations corresponding to the information filling error of the beacon request message. For example, when the field corresponding to the measurement mode is filled with "0", the measurement mode corresponding to the beacon request message is passive. When the field corresponding to the measurement mode is filled with "2", the measurement mode corresponding to the beacon request message is beacon table mode. Further, in some embodiments of the present disclosure, signal parameter information is collected from the first terminal device. The first network device sends the beacon request message to the first terminal device directionally, and thus the corresponding measurement mode is active mode, and the field of the corresponding measurement mode fields shall be filled with "1". Therefore, when the field corresponding to the measurement mode is filled with "0" or "2", an information filling error in the beacon request message is indicated. The beacon request message meets the preset refusal condition. The first terminal device sends refusal indication signaling to the first network device.

It should be noted that when a security risk presents in the identification information carried in the beacon request message, a third-party device may be allowed to sniff and track information during the subsequent signal transmission, thus compromising the security of signal transmission. Therefore, the first terminal device sends a refusal indication to the first network device.

It should be noted that when the first terminal device is occupied by another service, such as low-latency services and a peer-to-peer (P2P) communication, it is not possible for the first terminal device to send a probe request message to the second network device. Thus, the first terminal device sends a refusal indication signaling to the first network device. Otherwise, an adverse impact may pose on the service currently performed by the first terminal device.

It should be noted that the refusal indication signaling may be included in a data frame, a management frame, or a control frame sent by the first terminal device to the first network device. In addition, the first terminal device can further send the refusal indication signaling to the first network device through a beacon response message. The beacon response message corresponds to the beacon request message. After receiving the beacon request message, the first terminal device sends the beacon response message to the first network device to indicate that the beacon request message has been received.

It can be understood that the beacon request message includes an optional element field, and the identification information is provided in the optional element field.

It should be noted that with reference to FIG. 5, the beacon request message includes an 'Operating Class' field, a 'Channel Number' field, a 'Randomization Interval' field, a 'Measurement Duration' field, a 'Measurement Mode' field, a 'Basic Service Set Identifier' (BSSID) field, and an 'Optional Subelements' field. The length of the 'Measurement Mode' field is one byte (Octets), and the corresponding measurement mode can be selected according to the setting of the measurement mode field, with "0" denoted as a passive mode, "1" denoted as an active mode, and "2" denoted as a beacon-table mode. The length of the 'Operating Class' field is 1 byte and the length of the channel number is 1 byte. The combination of the two can specify the channel to be scanned. Both the 'Randomization Interval' field and the 'Measurement Duration' field are 2 bytes in length, and the random interval is a waiting delay before a measurement starts. The basic service set identifier field is 6 bytes in length. The length of 'Optional Subelements' is variable and can be set as required. In an embodiment of the present disclosure, the identification information is provided in the 'Optional Subelements' field.

It can be understood that the probe request message includes a MAC header and a frame body. The identification information is provided in the MAC header or the frame body.

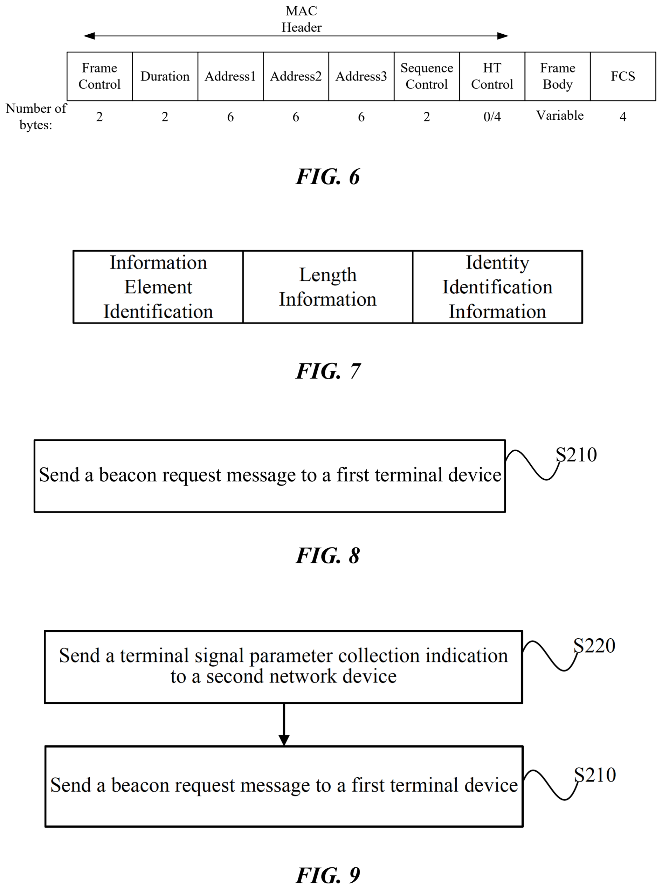

It should be noted that with reference to FIG. 6, the probe request message includes Frame Control', 'Duration', 'First Address' (Address1), 'Second Address' (Address2), 'Third Address' (Address3), 'Sequence Control', 'high-speed throughput' (HT Control), Frame Body and Frame Check Sequence (FCS). 'Frame control', 'Duration', 'First Address', 'Second Address', 'Third Address', 'Sequence Control', and 'high-speed throughput' constitute MAC headers. The identification information is stored in the MAC header or the Frame Body.

It should be noted that the length of the 'Frame Control' field is 2 bytes, the length of the 'Duration' is 2 bytes, the length of the 'First Address' field is 6 bytes, the length of the 'Second Address' field is 6 bytes, the length of the 'Third Address' field is 6 bytes, the length of the 'Sequence Control' field is 2 bytes, the length of the 'high-speed throughput' field is 0 or 4 bytes, the length of the Frame Body is variable and can be set as required, and the length of the 'Frame Check Sequence' field is 4 bytes.

It should be noted that the identification information may be MAC address information, Device ID information, or unencrypted/encrypted Personal Identifiable Information (PII). The Device ID information is the device identification information of the first terminal device. When the identification information is MAC address information, the identification information is located in the frame body. When the identification information is MAC address information, the identification information is located in the MAC head, and in particular may be located in the Transmitter Address, (TA) or the second address (Address2).

It can be understood that, referring to FIG. 7, the identification information includes at least one of an information element identification, length information, and identity recognition information. The information element identification is configured to uniquely identify the identification information. The length information is indicative of the length of the identity recognition information. The identity recognition information is configured to uniquely identify the first terminal device.

It should be noted that the identification information includes at least one of, information element identification, length information, or identity recognition information. The identity recognition information is the information allocated to the first terminal device to indicate the information in the sent probe request message, and can be employed to uniquely identify the first terminal device. The length information is indicative of the length of the identity recognition information. When the value of the length information is "0", the identification information does not carry any identity recognition information. The information element identification is configured to uniquely identify the identification information, and each identification information corresponds to one information element identification.

FIG. 8 depicts a flowchart showing a method for signal transmission according to an embodiment of the present disclosure, at a first network device. The method for signal transmission is applied to the first network device. The method includes but is not limited to the following operations.

At Operation S210, a beacon request message is sent to a first terminal device. The beacon request message carries identification information, the identification information is indicative of a support of random MAC address function by the first terminal device and identifies the first terminal device.

It should be noted that the beacon request message sent by the first network device to the first terminal device in an embodiment of the present disclosure carries the identification information. The identification information is indicative of support of random MAC address function by the first terminal device. As such, during the transmission of the beacon request message, it is difficult for the third-party device to sniff and track the connection between the first terminal device and the network device. Therefore, the security of the signal during the transmission is significantly enhanced

It should be noted that operation S210 corresponds to operation S110. The first network device sends a beacon request message to the first terminal device. The first terminal device receives the beacon request message from the first network device.

It should be noted that the identification information indicative the first terminal device supports random MAC address function and to identify the first terminal device. According to the identification information, the first terminal device can access the wireless network through the random MAC address, so as to connect with the first network device or the second network device. In addition, based on the identification information, the second network device can recognize the first terminal device according to the received probe request message, and obtain the signal parameter information corresponding to the first terminal device.

It should be noted that the beacon request message is encrypted during transmission. Thus, it is not possible for a third-party device to sniff and track the identification information carried in the beacon request message and the probe request message.

Referring to FIG. 9, after operation S210, the method may further include but is not limited to the following operations.

At Operation S220, a terminal signal parameter collection indication is sent to a second network device. The terminal signal parameter collection indication carries the identification information.

It should be noted that before the beacon request message is sent, both the first network device and the second network device obtain the terminal signal parameter collection indication to achieve the collection of the signal parameter information of the first terminal device, and recommendation of another network device that is available for connection to the first terminal device. The first network device can send a terminal signal parameter collection indication to the second network device. The terminal signal parameter collection indication carries identification information, such that the first network device, the second network device, and the first terminal device can recognize the identification information during a subsequent signal transmission.

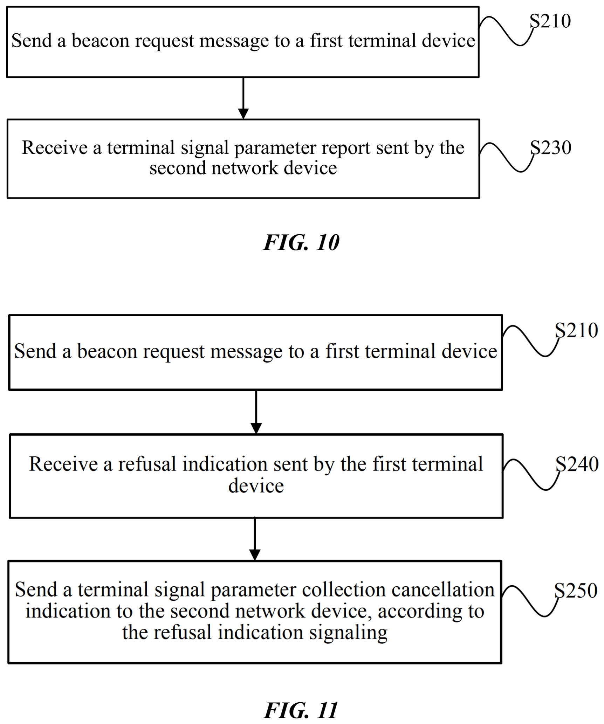

Referring to FIG. 10, after operation S210, the method may further include but is not limited to the following operations.

At Operation S230, a terminal signal parameter report sent by the second network device is received. The terminal signal parameter report carries the signal parameter information of the first terminal device.

It should be noted that after receiving the probe request message from the first terminal device, the second network device identifies the first terminal device according to the identification information, and can obtain the signal parameter information corresponding to the first terminal device. The second network device can integrate the signal parameter information of the first terminal device to generate a terminal signal parameter report. The first network device can analyze the terminal signal parameter report, so as to determine whether it is necessary to recommend another network device that is available for connection to the first terminal device.

It should be noted that the signal parameter information includes the Receive Signal Strength Indicator (RSSI) and Channel State Information (CSI). The RSSI is a strength indicator of the received signal. Link quality can be determined based on the RSSI. Also, a determination as to whether to increase the broadcast transmission strength can be made according to the RSSI. RSSI is a positioning technology, which measures the distance between the signal point where a signal is transmitted and the receiving point where the signal is received, by the strength of the received signal, and then performs positioning calculation according to the corresponding data. CSI is the channel attribute of a communication link. CSI describes the attenuation factor (e.g., signal scattering, environmental attenuation, or the like) of the signal over each transmission path, i.e., the value of each element in the channel gain matrix. CSI can adapt the communication system to the current channel conditions, and provide a guarantee for high-reliability and high-speed communication in multi-antenna systems.

Referring to FIG. 11, after operation S210, the method may further include but is not limited to the following operations.

At Operation S240, a refusal indication signaling sent by the first terminal device is received.

At Operation S250, a terminal signal parameter collection cancellation indication is sent to the second network device, according to the refusal indication signaling. The terminal signal parameter collection cancellation indication carries identification information.

It should be noted that operations S240 to S250 correspond to operation S130. When it is determined that the beacon request message meets the preset refusal condition, the first terminal device sends a refusal indication to the first network device. The first network device sends a terminal signal parameter collection cancellation indication to the second network device according to the refusal indication. The second network device cancels the terminal signal parameter collection indication according to the received terminal signal parameter collection cancellation indication. The terminal signal parameter collection cancellation indication carries identification information, such that the second network device can recognize the terminal signal parameter collection cancellation indication.

It should be noted that the first network device also cancels the terminal signal parameter collection indication for the first terminal device.

It should be noted that if the first network device is configured to obtain additional signal parameter information of the first terminal device after receiving the refusal indication signaling sent by the first terminal device, the first network device needs to regenerate the identification information when the refusal condition corresponding to the refusal indication signaling includes a security risk present in the identification information carried by the beacon request message. Alternatively, when the refusal condition corresponding to the refusal indication signaling does not include the security risk present in the identification information carried by the beacon request message, the first network device can resend the beacon request message to the first terminal device after a certain temporal interval.

It can be understood that the beacon request message includes an optional element field, and the identification information is provided in the optional element field.

It should be noted that with reference to FIG. 5, the beacon request message includes an 'Operating Class' field, a 'Channel Number' field, a 'Randomization Interval' field, a 'Measurement Duration' field, a 'Measurement Mode' field, a 'Basic Service Set Identifier' (BSSID) field, and an 'Optional Subelements' field. The length of the measurement mode field is one byte (Octets), and the corresponding measurement mode can be selected according to the setting of the measurement mode field, with "0" denoted as a passive mode, "1" denoted as an active mode, and "2" denoted as a beacon-table mode. The length of the 'Operating Class' field is 1 byte and the length of the channel number is 1 byte. The combination of the two can specify the channel to be scanned. Both the lengths of the 'Randomization Interval' field and the 'Measurement Duration' field are 2 bytes, and the random interval is a waiting delay before a measurement starts. The 'Basic Service Set Identifier' field is 6 bytes. The length of 'Optional Subelements' is variable and can be set as required. In an embodiment of the present disclosure, the identification information is provided in the 'Optional Subelements' field.

It can be understood that the probe request message includes a MAC header and a frame body. The identification information is provided in the MAC header or the frame body.

It should be noted that, the probe request message includes 'Frame Control', 'Duration', 'First Address' (Address1), 'Second Address' (Address2), 'Third Address' (Address3), 'Sequence Control', 'high-speed throughput' (HT Control), Frame Body and Frame Check Sequence (FCS). 'Frame control', 'Duration', 'First Address', 'Second Address', 'Third Address', 'Sequence Control' and 'high-speed throughput' constitute MAC headers. The identification information is stored in the MAC header or the frame body.

It should be noted that the identification information may be MAC address information, Device ID information, or unencrypted/encrypted Personal Identifiable Information (PII). The Device ID information is the identity recognition information of the first terminal device. When the identification information is MAC address information, the identification information is located in the frame body. When the identification information is MAC address information, the identification information is located in the MAC head, and in particular may be located in the 'Transmitter Address', (TA) or the 'Second Address' (Address2).

It can be understood that, referring to FIG. 7, the identification information includes at least one of, an information element identification, length information, and identity recognition information. The information element identification is configured to uniquely identify the identification information. The length information is indicative of the length of the identity recognition information. The identity recognition information is configured to uniquely identify the first terminal device.

It should be noted that the identification information includes at least one of information element identification, length information, or identity recognition information. The identity recognition information is the information allocated to the first terminal device to indicate the information in the sent probe request message, and can be employed to uniquely identify the first terminal device. The length information is indicative of the length of the identity recognition information. When the value of the length information is "0", the identification information does not carry any identity recognition information. The information element identification is configured to uniquely identify the identification information, and each identification information corresponds to one information element identification.

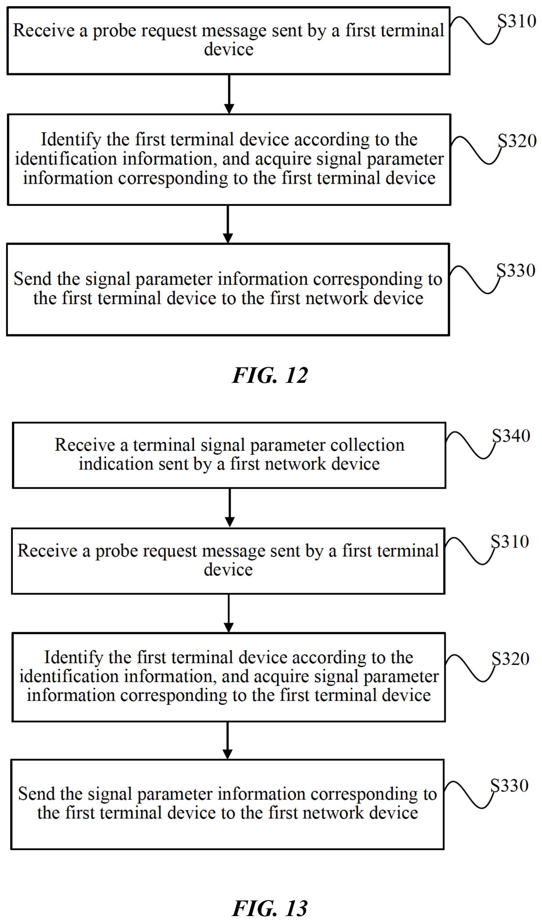

FIG. 12 depicts a flowchart showing a method for signal transmission according to an embodiment of the present disclosure, performed at a second network device. The method for signal transmission is applied to the second terminal device. The method includes but is not limited to the following operations.

At Operation S310, a probe request message sent by a first terminal device is received. The probe request message carries identification information. The identification information is indicative that the first terminal device supports random MAC address function and to identify the first terminal device.

At Operation S320, the first terminal device is identified according to the identification information, and signal parameter information corresponding to the first terminal device is acquired.

At Operation S330, the signal parameter information corresponding to the first terminal device is sent to the first network device.

It should be noted that the probe request message in an embodiment of the present disclosure carries the identification information. The identification information is indicative that the first terminal device supports random MAC address function and to identify the first terminal device. The second network device can recognize the first terminal device and obtain the signal parameter information corresponding to the first terminal device according to the identification information, so as to send the signal parameter information corresponding to the first terminal device to the first network device. In addition, the identification information corresponds to the beacon request message, so different probe request messages carry different identification information. Therefore, during the transmission of the probe request message, it is difficult for the third-party device to sniff and track the connection between the first terminal device and network device, such as the connection between the first network device and the second network device. Thereby, the security of the signal during transmission is significantly enhanced.

It should be noted that the identification information is indicative that the first terminal device supports random MAC address function and to identify the first terminal device. According to the identification information, the first terminal device can access the wireless network through the random MAC address, so as to connect with the first network device or the second network device. In addition, based on the identification information, the second network device can recognize the first terminal device according to the received probe request message, and obtain the signal parameter information corresponding to the first terminal device.

It should be noted that the second network device can recognize the first terminal device according to the identification information in the probe request message, and obtain the signal parameter information corresponding to the first terminal device. After receiving the signal parameter information corresponding to the first terminal device from the second network device, the first network device can determine whether to provide a candidate network device to the first terminal device according to the signal parameter information.

It should be noted that the signal parameter information includes the Receive Signal Strength Indicator (RSSI) and Channel State Information (CSI). The RSSI is an indicator of the received signal strength. Link quality can be determined based on the RSSI. Also, a determination as to whether to increase the broadcast transmission strength can be made according to the RSSI. RSSI is a positioning technology, which measures the distance between the signal point where a signal is transmitted and the receiving point where the signal is received, by the strength of the received signal, and then performs positioning calculation according to the corresponding data. CSI is the channel attribute of a communication link. CSI describes the attenuation factor (e.g., signal scattering, environmental attenuation, range attenuation, or the like) of the signal over each transmission path, i.e., the value of each element in the channel gain matrix. CSI can adapt the communication system to the current channel conditions, and provide a guarantee for high-reliability and high-speed communication in multi-antenna systems.

Referring to FIG. 13, before operation S310, the method may further include but is not limited to the following operations.

At Operation S340, a terminal signal parameter collection indication sent by a first network device is received. The terminal signal parameter collection indication carries identification information.

It should be noted that before the beacon request message is sent, both the first network device and the second network device obtain the terminal signal parameter collection indication to collect the signal parameter information of the first terminal device, so as to recommend other network devices that are available for connection to the first terminal device. The first network device can send a terminal signal parameter collection indication to the second network device. The terminal signal parameter collection indication carries identification information, such that the first network device, the second network device, and the first terminal device can recognize the identification information during a subsequent signal transmission.

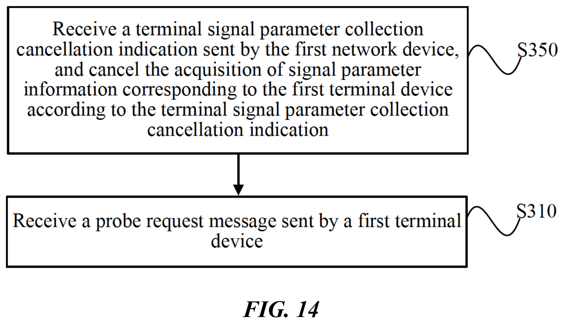

Referring to FIG. 14, after operation S310, the method may further include but is not limited to the following operations.

At Operation S350, a terminal signal parameter collection cancellation indication sent by the first network device is received. The acquisition of signal parameter information corresponding to the first terminal device is canceled according to the terminal signal parameter collection cancellation indication.

It should be noted that operation S340 corresponds to operations S240 to S250. The second network device cancels the terminal signal parameter collection indication according to the received terminal signal parameter collection cancellation indication from the first network device. The terminal signal parameter collection cancellation indication carries the identification information, such that the second network device can recognize the terminal signal parameter collection cancellation indication.

It can be understood that referring to FIG. 6, the probe request message includes a MAC header and a frame body. The identification information is located in the MAC header or the frame body.

It should be noted that, the probe request message includes 'Frame Control', 'Duration', 'First Address' (Address1), 'Second Address' (Address2), 'Third Address' (Address3), 'Sequence Control', 'high-speed throughput' (HT Control), Frame Body and Frame Check Sequence (FCS). 'Frame Control', 'Duration', 'First Address', 'Second Address', 'Third Address', 'Sequence Control' and 'high-speed throughput' constitute MAC headers. The identification information is stored in the MAC header or the frame body.

It should be noted that the identification information may be MAC address information, Device ID information, or unencrypted/encrypted Personal Identifiable Information (PII). The Device ID information is the device identification information of the first terminal device. When the identification information is MAC address information, the identification information is located in the frame body. When the identification information is MAC address information, the identification information is located in the MAC head, and in particular may be located in the 'Transmitter Address', (TA) or the 'Second Address' (Address2).

It can be understood that, referring to FIG. 7, the identification information includes at least one of an information element identification, length information, and identity recognition information. The information element identification is configured to uniquely identify the identification information. The length information is indicative of the length of the identity recognition information. The identity recognition information is configured to uniquely identify the first terminal device.

It should be noted that the identification information includes at least one of information element identification, length information, or identity recognition information. The identity recognition information is the information allocated to the first terminal device to indicate the information in the sent probe request message, and can be employed to uniquely identify the first terminal device. The length information is indicative of the length of the identity recognition information. When the value of the length information is "0", the identification information does not carry any identity recognition information. The information element identification is configured to uniquely identify the identification information, and each identification information corresponds to one information element identification.

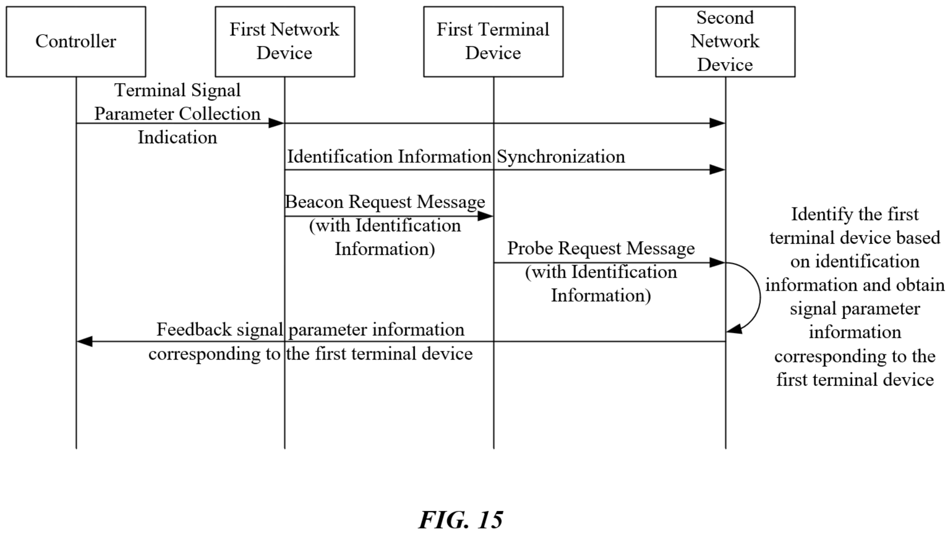

FIG. 15 depicts another schematic diagram showing a method for signal transmission according to an embodiment of the present disclosure. For a network including a controller, the controller first sends a terminal signal parameter collection indication to the first network device and the second network device. The terminal signal parameter collection indication carries identification information. The identification information is synchronized between the first network device and the second network device, such that the first network device, the second network device, and the first terminal device can identify the identification information during the subsequent signal transmission. The first network device sends a beacon request message to the first terminal device. The beacon request message carries the identification information that is indicative that the first terminal device supports the random MAC address function and to identify the first terminal device. The first terminal device appends the identification information to the probe request message such that the probe request message carries the identification information, and sends the probe request message to the second network device. The second network device identifies the first terminal device according to the identification information, obtains the signal parameter information corresponding to the first terminal device, and sends the signal parameter information to the controller in the form of a terminal signal parameter report. The controller determines whether to recommend a network device for the candidate connection to the first terminal device according to the received signal parameter information, i.e., the received signal strength indicator and the channel state message.

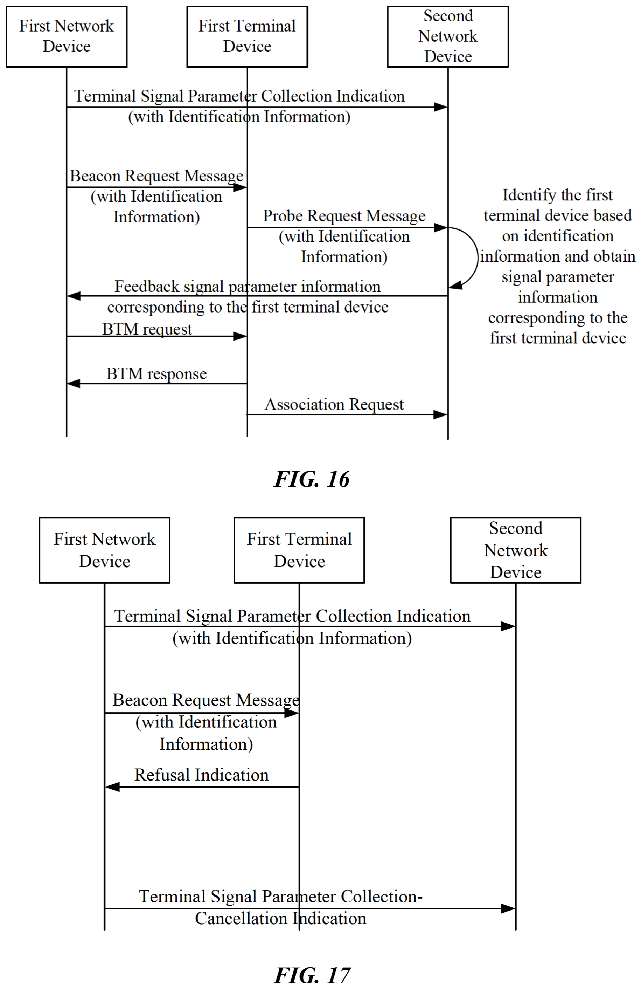

FIG. 16 depicts another schematic diagram showing a method for signal transmission according to an embodiment of the present disclosure. For a network that does not include a controller, a terminal signal parameter collection indication is first sent to a second network device through a first network device. The terminal signal parameter collection indication carries the identification information, such that the first network device, the second network device, and the first terminal device can identify the identification information during the subsequent signal transmission. The first network device sends a beacon request message to the first terminal device. The beacon request message carries the identification information that is indicative that the first terminal device supports the random MAC address function and to identify the first terminal device. The first terminal device appends the identification information to the probe request message such that the probe request message carries the identification information, and sends the probe request message to the second network device. The second network device identifies the first terminal device according to the identification information, acquires signal parameter information corresponding to the first terminal device, and sends the signal parameter information to the first network device in the form of a terminal signal parameter report. The signal parameter information includes RSSI and CSI. The first network device sends a basic service set (BSS) transition management (BTM) request to the first terminal device. The BTM request carries the information about the second network device. That is, the first network device recommends the second network device to the first terminal device. The first terminal device receives the recommendation and establishes a connection with the second network device through a BTM response and an association request corresponding to the BTM request.

FIG. 17 depicts another schematic diagram showing a method for signal transmission according to an embodiment of the present disclosure. FIG. 17 shows a general procedure of signal transmission in a network without a controller, under the condition that the beacon request message meets the preset refusal condition. First, a terminal signal parameter collection indication is sent to a second network device through a first network device. The terminal signal parameter collection indication carries the identification information, such that the first network device, the second network device, and the first terminal device can identify the identification information during the subsequent signal transmission. The first network device sends a beacon request message to the first terminal device. The beacon request message carries identification information. The identification information is indicative that the first terminal device supports the random MAC address function and to identify the first terminal device. However, when it is determined that the beacon request message meets the preset refusal condition, the first terminal device sends a refusal indication signaling to the first network device. The refusal condition includes at least one of, an information filling error of the beacon request message; a security risk present in the identification information carried in the beacon request message; or an occupation of the first terminal device by another service. After receiving the refusal indication signaling, the first network device sends a terminal signal parameter collection cancellation indication that carries identification information to the second network device. The acquisition of signal parameter information corresponding to the first terminal device is canceled according to the terminal signal parameter collection cancellation indication.

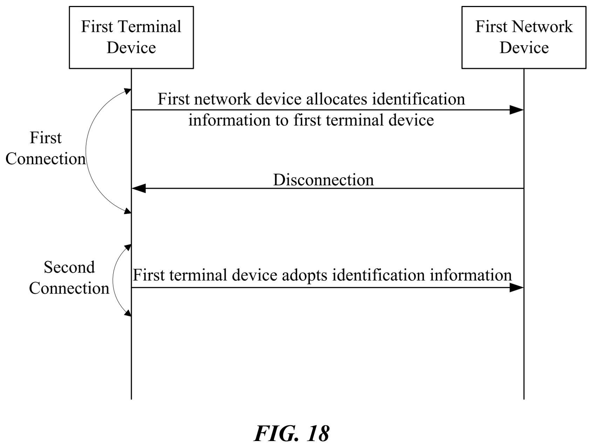

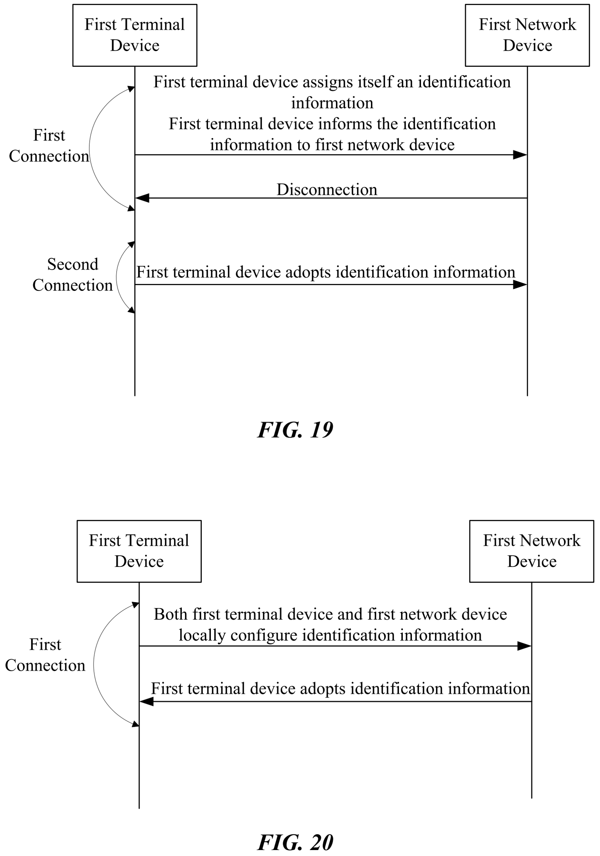

In addition, the identification information can be configured in various ways. For example, referring to FIG. 18, the first network device configures the identification information for the first terminal device, that is, the identification information is generated on the network side. It can be described in greater detail that the first network device allocates the identification information to the first terminal device during the establishment of the connection between the first terminal device and the first network device (i.e., the first connection). During a subsequent connection (e.g., the second connection), the first terminal device that adopts a random MAC address employs the identification information, so as to allow the first network device to identify the device as the first terminal device that previously established the connection. Referring to FIG. 19, the first terminal device configures identification information for itself and informs the first network device, that is, the identification information is generated at the terminal device side. It can be described in greater detail that during the establishment of a connection between the first terminal device and the first network device (i.e., the first connection), the first terminal device assigns a random MAC address, i.e., the identification information for itself, and informs the first network device through frame interaction. During a subsequent connection (e.g., the second connection), the first terminal device can employ the identification information to establish a connection with the first network device. The first network device can identify the device as the first terminal device that has previously established a connection through the identification information. Referring to FIG. 20, the first network device and the first terminal device respectively generate the identification information locally according to the same rule. It can be described in greater detail that during the establishment of the connection between the first terminal device and the first network device, the first terminal device and the first network device respectively generate the same random MAC address, i.e., the identification information. The first terminal device employs the identification information to interact with the first network device. The first network device identifies the device as the first terminal device through the identification information. In addition, the first terminal device or the first network device may generate and configure a plurality of pieces of identification information during one connection. It should be noted that the first network device is just a collective term. The network architecture includes a plurality of first network devices. The first terminal device can be connected to the same first network device in different connection processes, and may also be connected to different first network devices.

It should be noted that the first terminal device receives a beacon request message sent by the first network device. The beacon request message carries identification information. The identification information is indicative that the first terminal device supports the random MAC address function and to identify the first terminal device. After that, the first terminal device appends the identification information to a probe request message and sends the probe request information to the second network device. In an embodiment, the beacon request message carries the identification information that is appended to the probe request message to be sent to the second network device. In addition, the identification information corresponds to the beacon request message, so different probe request messages carry different identification information. Therefore, during the transmission of the probe request message, it is difficult for a third-party device to sniff and track the connection between the first terminal device and the network device. Thereby, the security of the signal during transmission is significantly enhanced.

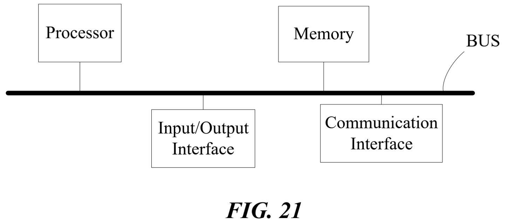

According to an embodiment, an electronic apparatus device is provided. As shown in FIG. 21, the apparatus includes one or more processors; a memory storing one or more programs, which when executed by the one or more processors, cause one or more processors to carry out the method for signal transmission method as described with respect to operations S110 to S120, or the method for signal transmission method as described with respect to operation S210, or the method for signal transmission as described with respect to operations S310 to S330.

The processor and the memory may be connected by a bus or other means.

As a non-transitory computer-readable storage medium, the memory can be configured to store non-transitory software programs and non-transitory computer-executable programs. In addition, the memory may include high-speed random-access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

Non-transitory software programs and instructions for the method for signal transmission in the above embodiments are stored in a memory which, when executed by a processor, causes the processor to carry out the operations of the method for signal transmission as described above, e.g., operations S110 to S120 described in conjunction with FIG. 3, or S210 described in conjunction with FIG. 8, or S310 to S330 described in conjunction with FIG. 12.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

According to an embodiment of the present disclosure, there is provided a computer-readable storage medium storing a computer-executable instruction which, when executed by a processor, causes the processor to carry out any one of the methods as described above.

It shall be appreciated by a person having ordinary skills in the art that all or some of the operations and systems disclosed above can be implemented as software, firmware, hardware, and their appropriate combinations. Some or all physical components can be implemented as software executed by a processor, such as a central processing unit, a digital signal processor, or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules, or other data. Computer storage medium includes, but is not limited to, RAM, ROM, EEPROM, flash memory or other memory technologies, CD-ROM, digital versatile disks (DVD) or other optical disk storage, magnetic cassettes, magnetic, tapes, magnetic disk storage or other magnetic storage medium, or any other medium that can be configured to store desired information and accessible by a computer. Furthermore, it is well known to those having ordinary skills in the art that communication media usually contains computer-readable instructions, data structures, program modules, or other data in modulated data signals such as carrier waves or other transmission mechanisms, and can include any information delivery media.

Some embodiments of the present disclosure are described in conjunction with the drawings above. However, the present disclosure is not limited thereto. Various alternations can be made within the knowledge of those having ordinary skills in the art without departing from the scope of the present disclosure. Further, the embodiments of the present disclosure and the features in the embodiments may be combined with each other without conflict.

## Claims

1. A method for signal transmission, which is applied to a first terminal device, the method comprising:
receiving a beacon request message sent by a first network device; wherein the beacon request message carries identification information, and the identification information is indicative that the first terminal device supports random Media Access Control (MAC) address and to identify the first terminal device; and
appending the identification information to a probe request message, and sending the probe request message to a second network device.

2. The method according to claim 1, wherein after receiving the beacon request message sent by the first network device, the method further comprises,
sending a refusal indication to the first network device, in response to a determination that the beacon request message meets a preset refusal condition; wherein the refusal indication indicates that the first terminal device refuses to carry the identification information in the probe request message; and
the refusal condition comprises at least one of,
an information filling error of the beacon request message;
a security risk present in the identification information carried by the beacon request messages; or an occupation of the first terminal device by another service.

3. The method according to claim 1 or 2, wherein the beacon request message comprises an optional element field, and the identification information is positioned in the optional element field.

4. The method according to claim 1 or 2, wherein the probe request message comprises a MAC header and a frame body, and the identification information is positioned in the MAC header or the frame body.

5. The method according to claim 1 or 2, wherein the identification information comprises at least one of, an information element identification, length information, or identity recognition information; wherein the information element identification is configured to uniquely identify the identification information, the length information is configured to indicate a length of the identity recognition information, and the identity recognition information is configured to uniquely identify the first terminal device.

6. A method for signal transmission, which is applied to a first network device, the method comprising:
sending a beacon request message to a first terminal device; wherein the beacon request message carries identification information, and the identification information is indicative that the first terminal device supports a random Media Access Control (MAC) address and to identify the first terminal device.

7. The method according to claim 6, wherein before sending the beacon request message to the first terminal device, the method further comprises,
sending a terminal signal parameter collection indication to a second network device; wherein the terminal signal parameter collection indication carries the identification information.

8. The method according to claim 7, wherein after sending the beacon request message to the first terminal device, the method further comprises,
receiving a terminal signal parameter report sent by the second network device; wherein the terminal signal parameter report carries signal parameter information of the first terminal device.

9. The method according to claim 7, wherein after sending the beacon request message to the first terminal device, the method further comprises,
receiving a refusal indication signaling sent by the first terminal device; and
sending a terminal signal parameter collection cancellation indication to the second network device, according to the refusal indication signaling; wherein the terminal signal parameter collection cancellation indication carries identification information.

10. The method according to any one of claims 6 to 9, wherein the beacon request message comprises an optional element field, and the identification information is positioned in the optional element field.

11. The method according to any one of claims 6 to 9, wherein the identification information comprises at least one of, an information element identification, length information, or identity recognition information; wherein the information element identification is configured to uniquely identify the identification information, the length information is configured to indicate a length of the identity recognition information, and the identity recognition information is configured to uniquely identify the first terminal device.

12. A method for signal transmission, which is applied to a second network device, the method comprising:
receiving a probe request message sent by a first terminal device; wherein the probe request message carries identification information, and the identification information is indicative that the first terminal device supports random Media Access Control (MAC) address and to identify the first terminal device;
identifying the first terminal device according to the identification information, and acquiring signal parameter information corresponding to the first terminal device; and
sending the signal parameter information corresponding to the first terminal device to a first network device.

13. The method according to claim 12, wherein before receiving the probe request message sent by the first terminal device, the method further comprises,
receiving a terminal signal parameter collection indication sent by the first network device; wherein the terminal signal parameter collection indication carries the identification information.

14. The method according to claim 13, wherein after receiving the probe request message sent by the first terminal device, the method further comprises,
receiving a terminal signal parameter collection cancellation indication sent by the first network device, and canceling an acquisition of signal parameter information corresponding to the first terminal device according to the terminal signal parameter collection cancellation indication.

15. The method according to any one of claims 12 to 14, wherein the probe request message comprises a MAC header and a frame body, and the identification information is provided in the MAC header or the frame body.

16. The method according to any one of claims 12 to 14, wherein the identification information comprises at least one of, an information element identification, length information, or identity recognition information, wherein the information element identification is configured to uniquely identify the identification information, the length information is configured to indicate a length of the identity recognition information, and the identity recognition information is configured to uniquely identify the first terminal device.

17. An electronic apparatus, comprising,
at least one processor; and
a memory storing at least one program thereon, which when executed by the processor, causes the processor to carry out the method according to any one of claims 1 to 5, or the method according to any one of claims 6 to 11, or the method according to any one of claims 12 to 16.

18. A computer-readable medium storing a computer program thereon, which when executed by a processor, causes the processor to carry out the method according to any one of claims 1 to 5, or the method according to any one of claims 6 to 11, or the method according to any one of claims 12 to 16.
